# EUROPEAN PATENT APPLICATION

(11) **EP 4 641 428 A1**
(43) Date of publication of application: **29.10.2025**
(21) Application number: 24202812.4
(22) Date of filing: 26.09.2024
(51) Int. Cl.: G06F 30/17, F04D 13/06, F04D 15/00, G06F 111/20, G06F 119/06, G06F 119/14

(54) **A COMPUTER-IMPLEMENTED DESIGN METHOD OF AN ASYNCHRONOUS MOTOR FOR A PUMP**

(30) Priority: 24.04.2024 CN 202410502025
(71) Applicant: Anhui Shinhoo Canned Motor Pump Co., Ltd., Hefei City, Anhui Province 230000 (CN)
(72) Inventor: HAN, Zongmei, Hefei City, Anhui Province,, 230000 (CN); OUYANG, Zhaosheng, Hefei City, Anhui Province,, 230000 (CN)
(74) Representative: Zermani Biondi Orsi, Umberto

(57) **Abstract**

The present invention relates to a computer-implemented design method of an asynchronous motor for a pump, the asynchronous motor is applied in a centrifugal pump and the design method includes: selecting a centrifugal pump hydraulic model based on the preset design specification for a centrifugal pump, and extracting a design specification for a motor through the selected centrifugal pump hydraulic model; selecting a motor model based on the design specification for the motor, setting a plurality of parameters of the selected motor model to create a plurality of motor design schemes, and determining the performance at specific points of the motor corresponding to each scheme, wherein, setting the plurality of parameters includes setting fixed values and setting range values; screening the plurality of motor design schemes based on the design specification for the motor and the performance at specific points of the motor corresponding to each motor design scheme, wherein if there is a motor design scheme that meets the design specification for the motor, returning the motor design scheme that meets preset conditions. The technical solution of the embodiment of the present invention achieves the mutual conversion relationship between centrifugal pump hydraulic performance parameters and motor performance parameters, improving the scientificity and accuracy of the asynchronous motor design process.

## Description

### CROSS-REFERENCE TO RELATED APPLICATIONS

This application claims the full benefit of and priority to Chinese Application Number CN 2024105020255 filed on April 24, 2024.

### Field of the Invention

The present invention relates to the field of motor technology, particularly to a computer-implemented design method of an asynchronous motor for a pump.

### Background of the Invention

As a fluid machinery for energy transmission, a centrifugal pump converts the mechanical energy of the motor into fluid energy during its operation, thereby transporting the fluid to a high position to increase potential energy or to a higher-pressure space. On the market, the centrifugal pump mostly uses asynchronous motors. The performance output curves of the centrifugal pump using asynchronous motors include a flow-head curve, a flow-input power curve, and a flow efficiency curve. The rotation speed of each operating point on these curves is different, and the rotation speed of each operating point is determined by both motor characteristics and hydraulic characteristics. The traditional design of asynchronous motors for a centrifugal pump is an open-loop design through the rated point power, rotation speed, and efficiency requirements of the centrifugal pump given design requirements. After design, a prototype is made for testing to obtain the performance output curve of the centrifugal pump, and the curve is evaluated to determine whether the design meets the design requirements. If it does not meet the requirements, the motor design scheme needs to be optimized based on the test results and then verified by sample preparation. This process is repeated until the performance specification of the centrifugal pump is met.

Therefore, it is necessary to improve the existing design method, so that the design process of the centrifugal pump asynchronous motor can be combined with the performance calculation of the known hydraulic model to obtain a motor scheme that meets the performance specification of the centrifugal pump during the design stage and produce a performance curve for the centrifugal pump, making the resulting asynchronous motor design scheme more scientific and accurate, effectively avoiding repeated sample preparation and verification.

### Summary of the invention

The present invention provides a computer-implemented design method and device of an asynchronous motor for a pump, aiming to improve the scientificity and accuracy of the design process of an asynchronous motor.

In a first aspect, the embodiment of the present invention provides a computer-implemented design method of an asynchronous motor for a pump, the asynchronous motor is applied in a centrifugal pump, and the computer-implemented design method includes:
- selecting a centrifugal pump hydraulic model based on the preset design specification for a centrifugal pump, and extracting a design specification for a motor through the selected centrifugal pump hydraulic model;
- selecting a motor model based on the design specification for the motor, setting a plurality of parameters of the selected motor model to create a plurality of motor design schemes, and determining the performance at specific points of the motor corresponding to each scheme, wherein setting the plurality of parameters includes setting fixed values and setting range values; and
- screening the plurality of motor design schemes based on the design specification for the motor and the performance at specific points of the motor corresponding to each motor design scheme, wherein if there is a motor design scheme that meets the design specification for the motor, returning the motor design scheme that meets preset conditions.

In a second aspect, the embodiment of the present invention provides an electronic device, including:
- one or more processors; and
- a storage for storing one or more programs,
- when the one or more programs are executed by the one or more processors, the one or more processors implement the computer-implemented design method of an asynchronous motor for a pump as provided in any embodiment of the present invention.

Preferably, the electronic device comprises a desktop computer, a laptop or a workstation.

In a third aspect, the embodiment of the present invention provides a computer readable storage medium storing one or more programs, the one or more programs comprising instructions which when executed by one or more processors of an electronic device, cause the electronic device to perform the computer-implemented design method of an asynchronous motor for a pump as provided in any embodiment of the present invention.

A computer-implemented design method and device of an asynchronous motor for a pump provided by the embodiments of the present invention achieves the mutual conversion relationship between centrifugal pump hydraulic performance parameters and motor performance parameters by effectively linking the relationship between rotation speed and shaft power of both, thereby achieving the prediction of actual performance specification and performance curves of centrifugal pumps through simulation calculations under specific motor design schemes, greatly improving the scientificity and accuracy of the asynchronous motor design process.

### Brief description of the drawings

A more complete understanding of the present invention may be derived by referring to the detailed description and claims when considered in connection with the following illustrative figures:
- Fig. 1 is a flowchart of a design method of an asynchronous motor for a pump provided in Embodiment 1 of the present invention;
- Fig. 2 is a flowchart of a design method of an asynchronous motor based on centrifugal pump performance specification in Embodiment 1 of the present invention;
- Fig. 3 is a schematic diagram of a design model of an asynchronous motor in Embodiment 1 of the present invention;
- Fig. 4 is a schematic diagram of the stator groove type of an asynchronous motor in Embodiment 1 of the present invention;
- Fig. 5 is a characteristic curve diagram of the rotation speed and shaft power of an asynchronous motor in Embodiment 1 of the present invention;
- Fig. 6 is a curve diagram for calculating the flow and the shaft power of the centrifugal pump at a constant rotation speed n_k+1 in Embodiment 1 of the present invention; and
- Fig. 7 is a structural schematic diagram of an electronic device provided in Embodiment 2 of the present invention.

### Detailed Specification

The present invention is further described in detail in combination with the accompanying drawings and embodiments. It is understood that the specific embodiments described herein are only used to explain the present invention, and are not intended to limit the present invention. It is also necessary to note that, for ease of description, only the relevant parts of the drawings are shown, not all of them.

### Embodiment 1

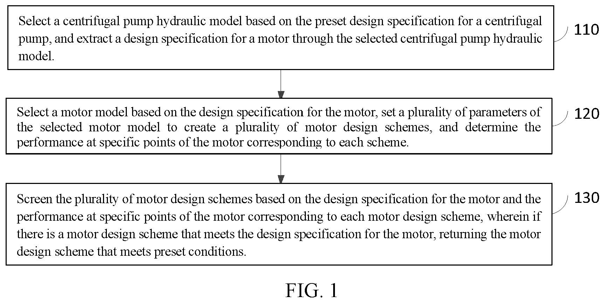

Fig. 1 is a flowchart of a computer-implemented design method of an asynchronous motor for a pump provided in Embodiment 1 of the present invention. This embodiment can be applied to the design of an asynchronous motor in a centrifugal pump. This method can be implemented by a computer device executing a program stored in its storage. This method specifically includes the following steps.

Step 110: a centrifugal pump hydraulic model is selected based on the preset design specification for a centrifugal pump, and a design specification for a motor is extracted through the selected centrifugal pump hydraulic model.

In this step, a centrifugal pump hydraulic model design software is pre-installed in the computer equipment, and a user inputs a preset design specification for a centrifugal pump. Through model comparison in the centrifugal pump hydraulic model library, a centrifugal pump hydraulic model that is suitable for the preset design specification for a centrifugal pump is determined. Through the selected centrifugal pump hydraulic model, the centrifugal pump performance specification is converted into a design specification for an asynchronous motor. The software for centrifugal pump hydraulic model design can choose design software such as ANSYS CFX and PumpLinx.

Step 120: a motor model is selected based on the design specification for the motor, a plurality of parameters of the selected motor model are set to create a plurality of motor design schemes, and the performance at specific points of the motor corresponding to each scheme is determined.

In this step, a motor model software is pre-installed in the computer equipment, and the setting of parameters comprises setting fixed values and setting range values. The motor models in the motor model library are compared with the design specification for a motor, and the motor model that is suitable for the design specification for a motor is selected. Some of the plurality of parameters in the motor model are set as fixed values, while others may be set as range values for subsequent optimization. After setting the plurality of parameters in the motor model, different values of the parameters will create a plurality of motor design schemes, and the performance at specific points of the motor corresponding to each motor design scheme is determined. The software for a motor model design can choose design software such as ANSYS Electronics and ANSYS Motor-CAD.

Step130: the plurality of motor design schemes are screened based on the design specification for the motor and the performance at specific points of the motor corresponding to each motor design scheme, and if there is a motor design scheme that meets the design specification for the motor, the motor design scheme that meets preset conditions is returned.

In this step, the design schemes are screened based on the design specification for the motor and the performance at specific points of the motor, and if there is a design scheme that meets the specification, this design scheme will be returned.

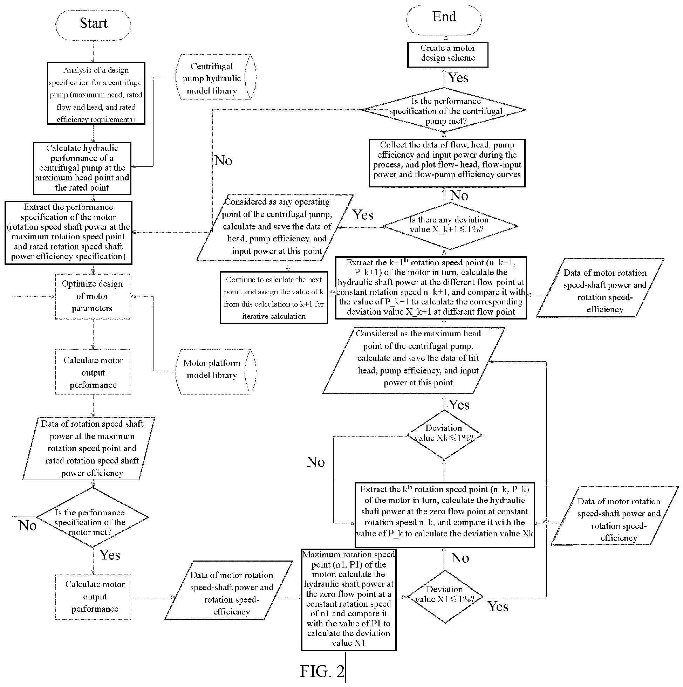

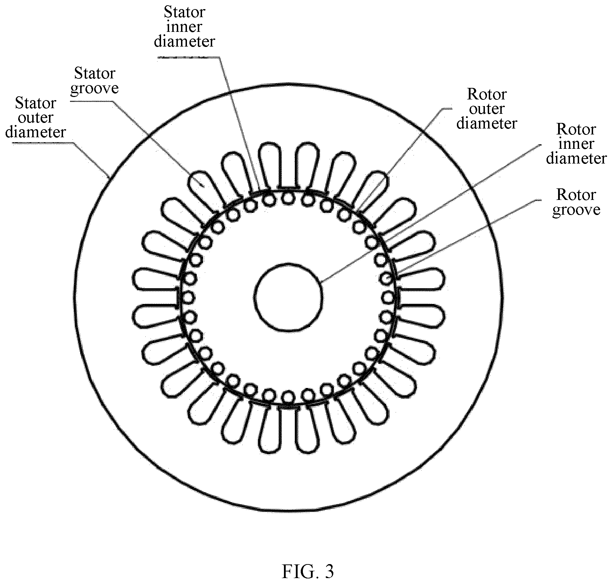

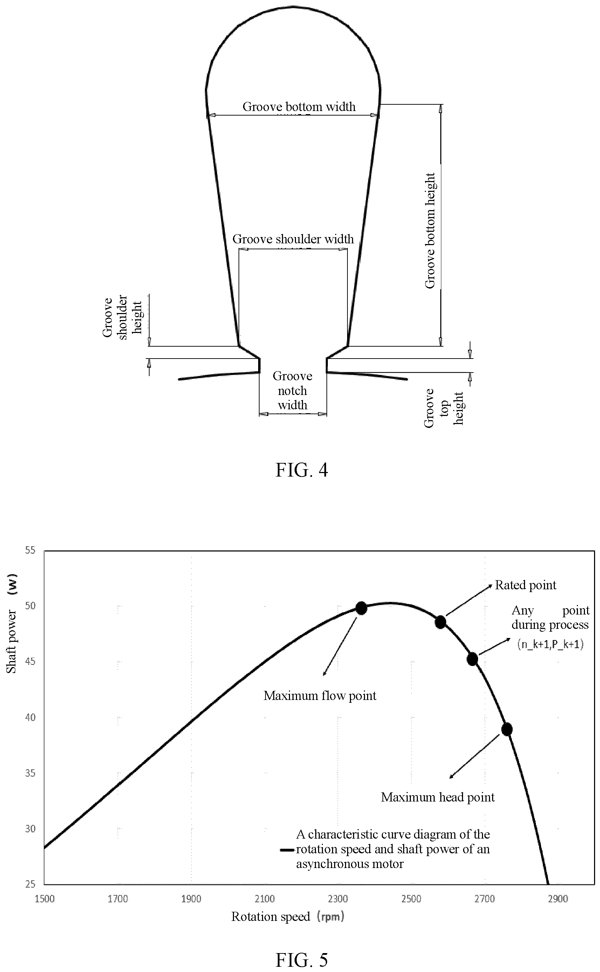

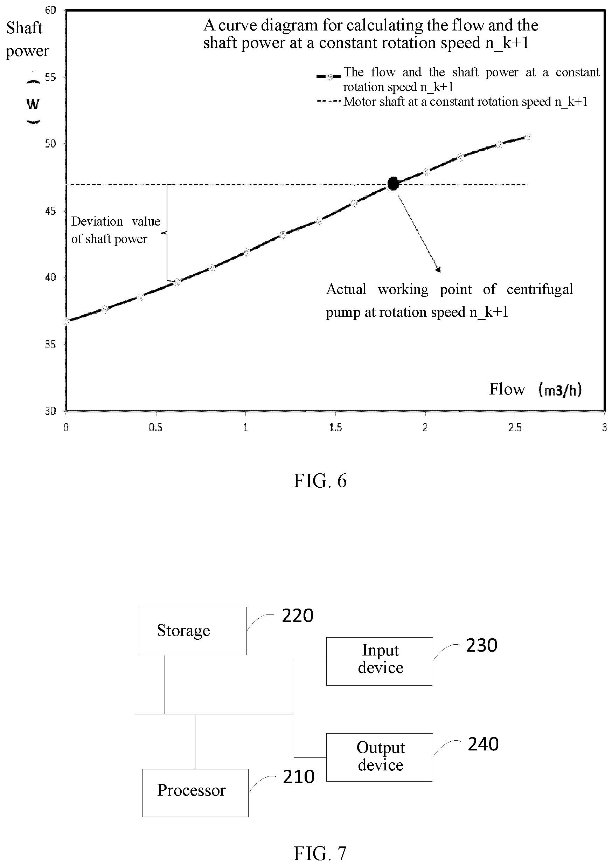

As an alternative implementation, Fig. 2 shows a flowchart of a design method of an asynchronous motor for a pump, and the following are the specific steps.
1. The design specification for a centrifugal pump using an asynchronous motor is input, and typically, the design specification for the centrifugal pump comprises a maximum head H_max requirement of the centrifugal pump, a rated point flow Q_c, a head H_c and a pump efficiency η_c requirements, and a maximum pump efficiency η_max and a maximum flow Q_max requirements.
2. A suitable hydraulic model is selected from a centrifugal pump hydraulic model library based on the design specification for the centrifugal pump, and the hydraulic performance is calculated using the selected hydraulic model to acquire a rotation speed n_max at a maximum head point and a shaft power P_0 data of the centrifugal pump, and a rotation speed n_c at rated point, a shaft power P_c, and a hydraulic efficiency η2_c data of the centrifugal pump.
3. The design specification for the motor is extracted, wherein the maximum head rotation speed point of the centrifugal pump corresponds to the maximum rotation speed point of the motor, and the centrifugal pump has the characteristic that the shaft power increases with the increase in rotation speed, a first design specification for the motor is that the motor should meet P_0 ≤ the shaft power ≤ 1.03* P_0 at the rotation speed n_max; and the rated point of the centrifugal pump corresponds to the rated point of the motor, a second design specification for the motor is the motor should meet P_c ≤ the shaft power ≤ 1.03 * P_c at the rotation speed n_c, and at this time the motor efficiency 5= η_c/η2_c.
4. A suitable motor model is selected from the motor model library and the design is calculated based on the design specification for a motor and the parameters of the motor model are customized and optimized. The parameters of the motor model are shown in Fig. 3, which include a stator outer diameter, a stator inner diameter, a stator groove type parameter, a rotor outer diameter, a rotor inner diameter, a rotor groove parameter, a stator-rotor stack height, and a material selection, wherein the rotor groove parameter include the groove hole diameter and a distance between the groove center and the rotor center, and the diagram of the stator groove type is shown in Fig. 4 and the stator groove parameter include the groove notch width, the groove notch height, the groove shoulder width, the groove shoulder height, the groove bottom width, and the groove bottom height. These motor parameters together create an asynchronous motor design scheme.
5. Some parameters above that need to be optimized are selected so as to set optimization range values, and the parameters that need not to be optimized are well set, so that a series of motor design schemes are created. The performances at specific points of the motor are calculated, respectively. The calculated points include (1) the maximum rotation speed point: the shaft power value of the motor at the rotation speed point n_max is calculated and recorded; and (2) the rated point: the shaft power and motor efficiency values at the rotation speed point n_c is calculated and recorded.
6. After completing the calculations for all the design schemes mentioned above, the shaft power value at the maximum rotation speed point n_max, and the shaft power and the motor efficiency values at the rotation speed n_c for different design schemes are exported in a list format.
7. The motor design scheme is screened based on the performance specification for two motor set in step 3. If no motor design scheme meets the motor performance specification, it is to return back to step 3 and redesign new motor model parameters. If there are several motor design schemes that meet the performance specification, the design scheme with the highest rated point motor efficiency is selected.
8. The motor output performance is calculated for the selected motor design scheme, including calculating a motor shaft power and efficiency values at a plurality of different rotation speeds and recording them, wherein the rotation speed range for calculation is 60f/2P~60f/P (f is the power frequency, and P is the asynchronous motor pole pair number), and the rotation speed value interval may be set to 2rpm~30rpm. The smaller the interval, the more accurate the calculation but the larger the calculation amount.
9. The data of the motor shaft power and efficiency values at different rotation speeds is listed and plotted for saving. As shown in Fig. 5, it shows a characteristic curve diagram of the rotation speed and shaft power of an asynchronous motor, in which the shaft power of the asynchronous motor first increases and then decrease as the rotation speed decreases. The maximum head point corresponding to the centrifugal pump is the maximum operating rotation speed point of the asynchronous motor, and the maximum flow point corresponding to the centrifugal pump is the minimum operating rotation speed point of the asynchronous motor, and the rated point corresponding to the centrifugal pump is between the two aforementioned points.
10. A data point with a rotation speed of ≥n_max and closest to n_max is selected from the motor data in step 9 and is defined as the maximum rotation speed point (n1, P1), and the shaft power at the zero flow point at rotation speed n1 is calculated in the centrifugal pump hydraulic model, and the calculated result is recorded as P1_1, and then calculating a deviation value x1=(P1_1-P1)/P1; then a deviation value x1=(P1_1-P1)/P1 is calculated, If the deviation value is greater than 1%, the next motor rotation speed point (n_k, P_k) is taken from the data calculated in step 9 following the principle of from high rotation speed to low rotation speed, and the shaft power at the zero flow point at rotation speed n_k is calculated in the centrifugal pump hydraulic model, and the calculation result is recorded as Pk_k, then the deviation value xk = (Pk_k - P1)/P1 is calculated. The point is taken in turn until xk ≤ 1%, and then this point is considered as the maximum head point of the centrifugal pump. The flow, head, and hydraulic efficiency data of this point are obtained by calculating through the centrifugal pump hydraulic model. Combined with the efficiency data of the corresponding point of the motor calculated in step 8, the flow of the maximum head point, head, pump efficiency, and pump input power data of the centrifugal pump can be obtained, wherein the pump efficiency = the hydraulic efficiency * the motor efficiency, and the pump input power = the shaft power/the motor efficiency.
11. The data point (n_k+1, P_k+1) with a rotation speed greater than n_k and closest to n_k is selected from the motor data in step 9, and the hydraulic shaft power P2_K+1 at different flow points at a constant rotation speed of n_k+1 is calculated. Compared the calculated value with P_k+1. The deviation value X_k+1 corresponding to different flow points is calculated in turn, wherein X_k+1=(P2_K+1-P_k+1)/P_k+1. The flow is assigned by increasing from the previous point (n_k, P_k) at a certain interval (interval may be selected from 0.01*Qmax~0.1*Qmax). As shown in Fig. 6, at a constant rotation speed of n _k+1, the required shaft power of the centrifugal pump increases with the increase of the centrifugal pump flow. When P2_K+1<1.01*P_k+1 at a constant rotation speed of n_k+1 and flow Q_k, there must be a flow point such that the deviation value X_k+1 ≤ 1%. Then, this flow point is considered to be the actual operating point of the centrifugal pump at a rotation speed of n_k+1, and the flow, head, pump efficiency, and input power data at this point are calculated and saved; when P2_K+1 ≥ 1.01*P_k+1 at a constant rotation speed of n_k+1 and flow Q_k, there is no flow point such that the deviation value X_k+1 ≤1%.
12. Let K in step 11 be equal to k+1, and the recurrent calculation of step 11 and saving data until when the motor data point in step 9 is selected, there is no flow point that causes the deviation value X_k+1 ≤ 1%. Then the loop calculation is stopped.
13. The saved data (the flow, the head, the pump efficiency, and the input power) at each operating point from steps 10 to 12 are collected and summarized to plot the centrifugal pump performance curves (flow rate-head curve, flow-input power curve, and flow-efficiency curve), and obtain the comparison between the actual performance parameters of the centrifugal pump (the maximum head, the rated point flow, the head and the pump efficiency, the maximum pump efficiency, and maximum flow) and the centrifugal pump performance specification. If the performance specification is met, a motor design scheme is created. If not, it is to return back to step 3 and adjust the motor performance specification based on deviation degree of the actual performance from the performance specification, to re-calculate according to the process until a motor design scheme that meets the centrifugal pump performance specification is created.

The traditional design method of a motor for a centrifugal pump is to design a motor based on a given target rotation speed, a target power, and a target efficiency for motor design. After the design is completed, it is impossible to predict the actual output performance specification of the centrifugal pump in advance, and it is necessary to complete the final design scheme of the motor that meets the requirements through repeated sample preparation and testing. The design method of an asynchronous motor for a centrifugal pump in the present application intuitively verifies the rationality of the design scheme by converting the performance specification of the centrifugal pump into an asynchronous motor design specification, and then converting them into a specific motor design scheme to predict the actual output performance of the centrifugal pump.

### Embodiment 2

Fig. 7 is a structural schematic diagram of an electronic device provided in Embodiment 2 of the present invention. As shown in Fig. 7, the electronic device includes a processor 210, a storage 220, an input device 230, and an output device 240. The number of processors 210 in the electronic device may be one or more, and one processor 210 is taken as an example in Fig. 7. The processor 210, storage 220, input device 230, and output device 240 in the electronic device may be connected through a bus or other means, and a connection through a bus is taken as an example.

The storage 220, as a computer-readable storage medium, may be used to store software programs, computer-executable programs, and modules, such as the program instructions/modules corresponding to the pump asynchronous motor design method in the embodiment of the present invention. The processor 210 executes various functional applications and data processing of the electronic device by executing the software programs, instructions, and modules stored in the storage 220, thereby implementing the pump asynchronous motor design method described above.

The storage 220 may mainly include a storage program area and a storage data area, where the storage program area may store an operating system and at least one application program required for a function; the storage data area may store data created according to the use of the terminal, etc. In addition, the storage 220 may include high-speed random-access memory, and may also include non-volatile memory, such as at least one disk storage device, flash memory device, or other non-volatile solid-state storage device. In some examples, the storage 220 may further include a storage remotely located relative to the processor 210, which may be connected to the electronic device through a network. Examples of the network above include but are not limited to the Internet, Intranets, local area networks, mobile communication networks, and combinations thereof.

The input device 230 can be used to receive input digital or character information, as well as generate key signal inputs related to user settings and function control of the electronic device. The output device 240 can include display devices such as a display screen.

Although the present invention has been described in detail with general descriptions, specific embodiments, and tests, it is clear to those skilled in the art that some modifications or improvements can be made on the basis of the present invention.

## Claims

1. A computer-implemented design method of an asynchronous motor for a pump, **characterized in that**, the asynchronous motor is applied in a centrifugal pump, and the design method includes:
- selecting a centrifugal pump hydraulic model based on the preset design specification for a centrifugal pump, and extracting a design specification for a motor through the selected centrifugal pump hydraulic model;
- selecting a motor model based on the design specification for the motor, setting a plurality of parameters of the selected motor model to create a plurality of motor design schemes, and determining the performance at specific points of the motor corresponding to each scheme, wherein setting the plurality of parameters includes setting fixed values and setting range values; and
- screening the plurality of motor design schemes based on the design specification for the motor and the performance at specific points of the motor corresponding to each motor design scheme, wherein if there is a motor design scheme that meets the design specification for the motor, returning the motor design scheme that meets preset conditions.

2. The computer-implemented method according to claim 1, **characterized in that**, selecting a centrifugal pump hydraulic model based on the preset design specification for a centrifugal pump, and extracting the design specification for a motor through the selected centrifugal pump hydraulic model comprises:
- acquiring the design specification for a centrifugal pump using an asynchronous motor input from a user, wherein, the design specification for the centrifugal pump comprises a maximum head H_max requirement of the centrifugal pump, a rated point flow Q_c, a head H_c and a pump efficiency η_c requirements, and a maximum pump efficiency η_max and a maximum flow Q_max requirements; and
- selecting a suitable centrifugal pump hydraulic model from a centrifugal pump hydraulic model library based on the design specification for the centrifugal pump, and calculating a hydraulic performance using the selected centrifugal pump hydraulic model to obtain a rotation speed n_max at a maximum head point and a shaft power P_0 data of the centrifugal pump, and a rotation speed n_c at rated point, a shaft power P_c, and a hydraulic efficiency η2_c data of the centrifugal pump;
wherein the maximum head rotation speed point of the centrifugal pump corresponds to the maximum rotation speed point of the motor, and the rated point of the centrifugal pump corresponds to the rated point of the motor; the design specification for the motor includes a first design specification in which the motor should meet P_0 ≤ the shaft power ≤ 1.03* P_0 at the rotation speed n_max, and a second design specification in which the motor should meet P_c ≤ the shaft power ≤ 1.03 * P_c at the rotation speed n_c, and at this time, the motor efficiency 5= η _c/η2_c.

3. The computer-implemented method according to claim 2, **characterized in that**, selecting a motor model based on the design specification for the motor, setting a plurality of parameters of the selected motor model to create a plurality of motor design schemes, and determining the performance at specific points of the motor corresponding to each scheme comprises:
- selecting a suitable motor model from a motor model library based on the design specification for the motor and customizing the parameters of the motor model, wherein the parameters of the motor model include a stator outer diameter, a stator inner diameter, a stator groove type parameter, a rotor outer diameter, a rotor inner diameter, a rotor groove parameter, a stator-rotor stack height, and a material selection, wherein the rotor groove parameter include the groove hole diameter and a distance between the groove center and the rotor center, and the stator groove parameter include the groove notch width, the groove notch height, the groove shoulder width, the groove shoulder height, the groove bottom width, and the groove bottom height;
- setting the parameters that require setting range values and the parameters that require setting fixed values to create a series of motor design schemes, and calculating the performance at specific points of the motor, respectively, wherein the calculated points include the shaft power value of the motor at the maximum rotation speed point n_max and recorded and the shaft power and motor efficiency values at the rated point n_c is calculated and recorded; and
- exporting the shaft power value at the maximum rotation speed point n_max, and the shaft power and the motor efficiency values at the rotation speed n_c for each motor design scheme in a list format.

4. The computer-implemented method according to claim 3, **characterized in that**, screening the plurality of motor design schemes based on the design specification for the motor and the performance at specific points of the motor corresponding to each motor design scheme, wherein if there is a motor design scheme that meets the design specification for the motor, returning the motor design scheme that meets preset conditions comprises:
- selecting the motor design schemes based on the first design specification and the second design specification, wherein
if there are a plurality of schemes that meet the performance specification, selecting the motor design scheme with the highest motor efficiency at the rated point, and
if no motor design scheme meets the first and second design specification, redesigning the parameters of the motor model.

5. The computer-implemented method according to any of the preceding claims, **characterized in that**, the method further comprises calculating the motor output performance for the returned motor design scheme, including a motor shaft power value and efficiency values at a plurality of different rotation speeds, and recording them, wherein the rotation speed range for calculation is 60f/2P~60f/P, in which f is the power frequency, and P is the asynchronous motor pole pair number, and the rotation speed value interval is set to 2rpm~30rpm.

6. The computer-implemented method according to claim 5, **characterized in that**, the method further comprises listing and plotting the data of the motor shaft power and efficiency values at different rotation speeds for saving, wherein the maximum head point corresponding to the centrifugal pump is the maximum operating rotation speed point of the asynchronous motor, the maximum flow point corresponding to the centrifugal pump is the minimum operating rotation speed point of the asynchronous motor, and the rated point corresponding to the centrifugal pump is between the maximum head point and the maximum flow point corresponding to the centrifugal pump.

7. The computer-implemented method according to claim 6, **characterized in that**, the method further comprises:
- selecting a data point with a rotation speed of 5n_max and closest to n_max from the data of the motor shaft power and efficiency values at a plurality of different rotation speeds and defining it as the maximum rotation speed point (n1, P1), and calculating the shaft power at the zero flow point at rotation speed n1 in the centrifugal pump hydraulic model, and recording the calculated result as P1_1; calculating a deviation value x1=(P1_1-P1)/P1,
- if the deviation value is greater than 1%, selecting the next motor rotation speed point (n_k, P_k) from the data of the motor shaft power and efficiency values at a plurality of different rotation speeds following the principle of from high rotation speed to low rotation speed, and calculating the shaft power at the zero flow point at rotation speed n_k in the centrifugal pump hydraulic model, and recording the calculated result as Pk_k; calculating the deviation value xk=(Pk_k-P1)/P1;
- taking points in turn for calculation until xk≤1%, then consider this point as the maximum head point of the centrifugal pump; obtaining the data of the flow, the head, and hydraulic efficiency at this point by calculating through the centrifugal pump hydraulic model, obtaining the data of the flow, the head, the pump efficiency, and pump input power at the maximum head point of the centrifugal pump by combining the motor shaft power and efficiency values at corresponding points at a plurality of different rotation speeds, wherein the pump efficiency = hydraulic efficiency*motor efficiency, and the pump input power = shaft power/motor efficiency.

8. The computer-implemented method according to claim 7, **characterized in that**, the method further comprises:
- selecting a data point (n_k+1, P_k+1) with a rotation speed greater than n_k and closest to n_k from the data of the motor shaft power and efficiency values at a plurality of different rotation speeds, and calculating the hydraulic shaft power P2_K+1 at a plurality of different flow points at a constant rotation speed of n_k+1, and comparing it with the value of P_k+1, and calculating the corresponding deviation value X_k+1 at different flow points in turn, wherein X_k+1=(P2_K+1-P_k+1)/P_k+1, and the flow is assigned by increasing at a certain interval starting from the flow Q_k calculated at the previous point (n_k, P_k);
- selecting a flow point such that the deviation value X_k+1 ≤1% 1%, then considering the flow point to be the actual operating point of the centrifugal pump at the rotation speed n_k+1, calculating and saving the date of the flow, the head, the pump efficiency, and the input power for the point; when P2_K+1 ≥1.01*P_k+1 at the constant rotation speed n_k+1 and the flow Q_k, there is no flow point such that the deviation value X_k+1 ≤ 1%.

9. The computer-implemented method according to claim 8, **characterized in that**, the method further comprises letting k=k+1, repeating the above calculation of the hydraulic shaft power P2_K+1 at different flow points at a constant rotation speed of n_k+1, and comparing it with the value of P_k+1; recurrently calculating the corresponding deviation value X_k+1 at different flow points until the maximum and minimum operating rotation speed points of the asynchronous motor are selected such that there is no flow point where the deviation value X_k+1 ≤ 1%, then stopping the recurrent calculation.

10. The computer-implemented method according to claim 9, **characterized in that**, the method further comprises:
- collecting and summarizing the saved data for each operating point, wherein the saved data includes the flow, the head, the pump efficiency, and the input power; and
- plotting a centrifugal pump performance curve and obtaining a comparison between the actual performance parameters of the centrifugal pump and the performance specification for the centrifugal pump, wherein the centrifugal pump performance curve includes a flow-head curve, a flow-input power curve, and a flow-efficiency curve, and the actual performance parameters of the centrifugal pump include a maximum head, a rated point flow, a head and pump efficiency, a maximum pump efficiency, and a maximum flow;
wherein if the performance specification is met, a motor design scheme is created; if the performance specification is not met, the motor performance specification is adjusted based on the deviation of the actual performance from the performance specification, for repeating the calculation process until a motor design scheme that meets the performance specification for the centrifugal pump is created.

11. An electronic device, including:
• one or more processors (210); and
• a storage device (220) for storing one or more programs,
wherein the one or more programs are executed by the one or more processors (210), the one or more processors implementing the computer-implemented design method according to one or more of the preceding claims.

12. A computer readable storage medium storing one or more programs, the one or more programs comprising instructions which when executed by one or more processors of an electronic device, cause the electronic device to perform the computer-implemented design method according to any of claims 1-10.
